# EUROPEAN PATENT APPLICATION

(11) **EP 4 477 970 A1**
(43) Date of publication of application: **18.12.2024**
(21) Application number: 23752881.5
(22) Date of filing: 08.02.2023
(51) Int. Cl.: F25B 15/00, F24F 11/58, F25B 49/00

(54) **REMOTE MONITORING SYSTEM OF ABSORPTION-TYPE FREEZER**

(30) Priority: 08.02.2022 JP 2022018139
(71) Applicant: Panasonic Intellectual Property Management Co., Ltd., Kadoma-shi, Osaka 571-0057 (JP)
(72) Inventor: ISHIZAKI, Shuji, Kadoma-shi, Osaka 571-0057 (JP); MASUBUCHI, Yuta, Kadoma-shi, Osaka 571-0057 (JP); YANAGIHARA, Takashi, Kadoma-shi, Osaka 571-0057 (JP); YOSHINO, Kaito, Kadoma-shi, Osaka 571-0057 (JP); EBISAWA, Atsushi, Kadoma-shi, Osaka 571-0057 (JP)
(74) Representative: Eisenführ Speiser
(86) International application number: PCT/JP2023/004106
(87) International publication number: WO 2023/153417

(57) **Abstract**

The present disclosure provides a remote monitoring system of an absorption-type freezer that can constantly monitor lowering of a COP and perform a cause analysis about COP lowering.

A remote monitoring system of an absorption-type freezer includes: an absorption-type freezer 100 which includes a high-temperature regenerator 5, a low-temperature regenerator 6, an evaporator 1, a condenser 7, and an absorber 3 with circulation paths for an absorption liquid and a refrigerant being respectively formed by connecting those together by piping; and a server control unit 57, and the server control unit 57 determines whether or not a COP is lowered, performs an analysis process about a cause of lowering of the COP in a case where the COP is determined to be lowered, and performs improvement measure control for the COP in a case where the cause of lowering of the COP cannot be identified as a result of the analysis process about the cause of lowering of the COP.

## Description

### [Technical Field]

The present invention relates to a remote monitoring system of an absorption-type freezer and particularly to a remote monitoring system of an absorption-type freezer in which accurate assessment is made about lowering of heat exchange efficiency in a condenser.

### [Background Art]

Patent Literature 1 discloses an absorption-type freezer in which a control device, in the vicinity of each of a plurality of cooling loads, assesses whether a difference between a cold water setting temperature and a cold water outlet temperature, as a stability condition, is in a predetermined range and whether a cooling water outlet temperature is in a predetermined range and in a case where the stability condition continues for a predetermined time and an assumed concentrated liquid concentration is lower by a predetermined value, the control device performs a correction process for performing control so as to lower an inverter frequency of a dilute absorption liquid pump.

Patent Literature 2 discloses an absorption-type freezer including a control device which calculates a COP in a cooling operation, calculates a rate of change of the COP from the calculated COP and an assumed COP, and issues a forecast notification about a maintenance instruction in a case where it is assessed that an average rate of change of the COP for one month is a predetermined ratio or smaller.

### [Citation List]

### [Patent Literature]

[Patent Literature 1]
   Japanese Patent Laid-Open No. 2019-190708
[Patent Literature 2]
   Japanese Patent Laid-Open No. 2018-169075

### [Summary of Invention]

### [Technical Problem]

The present disclosure provides a remote monitoring system of an absorption-type freezer that can constantly monitor lowering of a COP and perform a cause analysis about COP lowering.

### [Solution to Problem]

In order to achieve the above object, a remote monitoring system of an absorption-type freezer of the present disclosure includes: an absorption-type freezer which includes a high-temperature regenerator, a low-temperature regenerator, an evaporator, a condenser, and an absorber with circulation paths for an absorption liquid and a refrigerant being respectively formed by connecting together, by piping, the high-temperature regenerator, the low-temperature regenerator, the evaporator, the condenser, and the absorber; and a control unit, and the control unit determines whether or not a COP is lowered, performs an analysis process about a cause of lowering of the COP in a case where the COP is determined to be lowered, and performs improvement measure control for the COP in a case where the cause of lowering of the COP is not present as a result of the analysis process about the cause of lowering of the COP.

Note that the present specification incorporates the entire contents of Japanese Patent Application No. 2022-018139, filed in Japan on February 8, 2022.

### [Advantageous Effects of Invention]

In the present disclosure, by a control unit, lowering of a COP can constantly be monitored, and a cause analysis about COP lowering can thereby be performed.

### [Brief Description of Drawings]

[Fig. 1] Fig. 1 is an outline configuration diagram of an absorption-type freezer according to a first embodiment.
[Fig. 2] Fig. 2 is a block diagram illustrating a control configuration of the first embodiment.
[Fig. 3] Fig. 3 is a flowchart illustrating an action of the first embodiment.
[Fig. 4] Fig. 4 is a graph representing a relationship between a cold water flow amount and a cold water flow amount output.
[Fig. 5] Fig. 5 is a graph representing a relationship between a gas flow amount and an opening of a gas fuel valve.
[Fig. 6] Fig. 6 is an explanatory diagram illustrating steps of a cause analysis process.

### [Description of Embodiments]

### (Knowledge Underlying the Invention and So Forth)

When the inventors conceived the present disclosure, there were techniques for an absorption-type freezer in which a determination was made about a COP based on a concentration of an absorption liquid in a stable operation and in which a rate of change of the COP was monitored for each month.

However, the inventors have found a problem that in such an absorption-type freezer, lowering of the COP is not constantly monitored, and in a case where the COP is lowered, an analysis about a cause of COP lowering, COP improvement control based on this analysis, and so forth cannot be formed as a system and have made a subject matter of the present disclosure for solving the above problem.

Accordingly, the present disclosure provides a remote monitoring system of an absorption-type freezer that can constantly monitor lowering of a COP and perform a cause analysis about COP lowering.

Embodiments will hereinafter be described in detail with reference to drawings. However, unnecessarily detailed descriptions might not be made. For example, detailed descriptions about already known items might not be made, and descriptions about substantially the same configurations might not be repeated. This is for avoiding a situation where the following descriptions become unnecessarily redundant and is for easy understanding by persons skilled in the art.

Note that the attached drawings and the following descriptions are provided for persons skilled in the art to sufficiently understand the present disclosure but are not intended to limit the subject matter recited in the claims.

### (First Embodiment)

A first embodiment will be described by using the drawings.

### [1-1. Configuration]

### [1-1-1. Configuration of Absorption-Type Freezer]

One embodiment of the present invention will hereinafter be described with reference to the drawings.

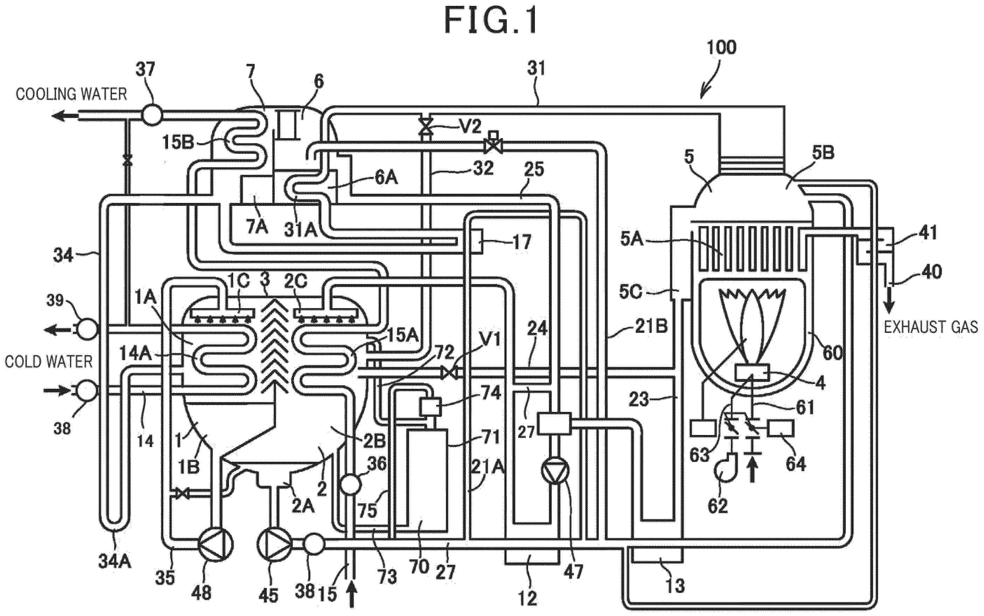

Fig. 1 is an outline configuration diagram of an absorption-type freezer according to the present embodiment. An absorption-type freezer 100 uses water as a refrigerant and uses an aqueous solution of lithium bromide (LiBr) as an absorption liquid.

As illustrated in Fig. 1, the absorption-type freezer 100 includes an evaporator 1, an absorber 2 which is juxtaposed with the evaporator 1, an evaporator absorber barrel 3 which houses the evaporator 1 and the absorber 2, a high-temperature regenerator 5 which includes a gas burner (heating means) 4, a low-temperature regenerator 6, a condenser 7 which is juxtaposed with the low-temperature regenerator 6, a low-temperature regenerator condenser barrel 8 which houses the low-temperature regenerator 6 and the condenser 7.

Further, the absorption-type freezer 100 includes a low-temperature heat exchanger 12, a high-temperature heat exchanger 13, a refrigerant drain heat collector 17, a dilute absorption liquid pump 45, a concentrated absorption liquid pump 47, and a refrigerant pump 48, those apparatuses are connected together by piping via absorption liquid pipes 21 to 25, refrigerant pipes 31 to 35, and so forth, and circulation paths are thereby formed.

The evaporator 1 is provided with a cold water pipe 14 for circulating and supplying brine, which exchanges heat with the refrigerant in the evaporator 1, to a thermal load (for example, an air-conditioning device) which is not illustrated, and a heat transfer pipe 14A formed in a part of the cold water pipe 14 is arranged in the evaporator 1.

The absorber 2 and the condenser 7 are provided with a cooling water pipe 15 for causing cooling water to sequentially flow through the absorber 2 and the condenser 7, and heat transfer pipes 15A and 15B which are formed in parts of the cooling water pipe 15 are respectively arranged in the absorber 2 and the condenser 7.

The absorber 2 has a function of causing an absorption liquid to absorb refrigerant vapor which is evaporated in the evaporator 1 and of retaining a pressure in the evaporator absorber barrel 3 in a highly vacuum state. A dilute absorption liquid pool 2A in which a dilute absorption liquid, which is diluted by absorbing the refrigerant vapor, is accumulated is formed in a lower portion of the absorber 2, and one end of a dilute absorption liquid pipe 21 having the dilute absorption liquid pump 45 is connected with the dilute absorption liquid pool 2A. The dilute absorption liquid pipe 21 includes a branch dilute absorption liquid pipe 21A which branches on a downstream side of the dilute absorption liquid pump 45.

The branch dilute absorption liquid pipe 21A passes via the refrigerant drain heat collector 17 and thereafter again merges with the dilute absorption liquid pipe 21 in a portion of the dilute absorption liquid pipe 21 on the downstream side of the low-temperature heat exchanger 12. Another end of the dilute absorption liquid pipe 21 opens in a gaseous layer portion 5B, which is positioned above a heat exchanging unit 5A formed in the high-temperature regenerator 5, after the high-temperature heat exchanger 13.

The dilute absorption liquid pipe 21 branches to a second branch pipe 21B on the downstream side of the low-temperature heat exchanger 12, and the second branch pipe 21B opens in the low-temperature regenerator 6.

The high-temperature regenerator 5 is configured to accommodate the gas burner 4 in a shell 60, and the heat exchanging unit 5A which heats and regenerates the absorption liquid by using flame of the gas burner 4 as a heat source is formed above the gas burner 4. An exhaust path 40 through which exhaust gas resulting from combustion by the gas burner 4 passes is connected with the heat exchanging unit 5A, and an exhaust gas heat exchanger 41 is provided in the exhaust path 40. Further, a gas pipe 61 to which fuel gas is supplied and an intake pipe 63 to which air from a blower 62 is supplied are connected with the gas burner 4, and a control valve 64 which controls amounts of the fuel gas and air is provided for the gas pipe 61 and the intake pipe 63.

On a side of the heat exchanging unit 5A, an intermediate absorption liquid pool 5C is formed in which an intermediate absorption liquid is accumulated, the intermediate absorption liquid being heated and regenerated by the heat exchanging unit 5A and thereafter flowing out from the heat exchanging unit 5A. One end of a second intermediate absorption liquid pipe 23 is connected with a lower end of the intermediate absorption liquid pool 5C, and the high-temperature heat exchanger 13 is provided in the second intermediate absorption liquid pipe 23. The high-temperature heat exchanger 13 heats the absorption liquid, which flows through a first intermediate absorption liquid pipe 22, by heat of the intermediate absorption liquid at a high temperature which flows out from the intermediate absorption liquid pool 5C and is intended to reduce a fuel consumption amount of the gas burner 4 in the high-temperature regenerator 5.

Another end of the second intermediate absorption liquid pipe 23 is connected with a concentrated absorption liquid pipe 25 which connects the low-temperature regenerator 6 and the absorber 2 together. Further, a portion of the second intermediate absorption liquid pipe 23 on an upstream side of the high-temperature heat exchanger 13 and the absorber 2 are connected together by an absorption liquid pipe 24 in which an open-close valve V1 is interposed.

The low-temperature regenerator 6 heats and regenerates the absorption liquid, which is accumulated in an absorption liquid pool 6A formed in the low-temperature regenerator 6, by using the refrigerant vapor separated by the high-temperature regenerator 5 as a heat source, and a heat transfer pipe 31A, which is formed in a part of the refrigerant pipe 31 extending from an upper end portion of the high-temperature regenerator 5 to a bottom portion of the low-temperature regenerator 6, is arranged in the absorption liquid pool 6A. The refrigerant vapor is caused to flow through the refrigerant pipe 31, heat of the refrigerant vapor is thereby transmitted to the absorption liquid accumulated in the absorption liquid pool 6A via the heat transfer pipe 31A, and the above absorption liquid is further concentrated.

One end of the concentrated absorption liquid pipe 25 is connected with the absorption liquid pool 6A of the low-temperature regenerator 6, and another end of the concentrated absorption liquid pipe 25 is connected with a concentrated liquid sprayer 2C which is provided in an upper portion of a gaseous layer portion 2B in the absorber 2. The concentrated absorption liquid pipe 25 is provided with the concentrated absorption liquid pump 47 and the low-temperature heat exchanger 12. The low-temperature heat exchanger 12 heats the dilute absorption liquid, which flows through the dilute absorption liquid pipe 21, by heat of a concentrated absorption liquid which flows out from the absorption liquid pool 6A of the low-temperature regenerator 6.

Further, the concentrated absorption liquid pipe 25 is provided with a bypass pipe 27 for bypassing the concentrated absorption liquid pump 47 and the low-temperature heat exchanger 12.

In a case where an operation of the concentrated absorption liquid pump 47 stops, the absorption liquid accumulated in the absorption liquid pool 6A of the low-temperature regenerator 6 is supplied into the absorber 2 through the concentrated absorption liquid pipe 25 and the bypass pipe 27.

As described above, the gaseous layer portion 5B of the high-temperature regenerator 5 and a refrigerant liquid pool 7A formed in a bottom portion of the condenser 7 are connected together by the refrigerant pipe 31. The refrigerant pipe 31 includes the heat transfer pipe 31A and the refrigerant drain heat collector 17 which are coupled, by piping, with the absorption liquid pool 6A of the low-temperature regenerator 6, and a portion of the refrigerant pipe 31 on the upstream side of the heat transfer pipe 31A and the gaseous layer portion 2B of the absorber 2 are connected together by the refrigerant pipe 32 in which an open-close valve V2 is interposed.

Further, one end of the refrigerant pipe 34, through which the refrigerant flowing out from the refrigerant liquid pool 7A flows, is connected with the refrigerant liquid pool 7A of the condenser 7, and another end of the refrigerant pipe 34 is connected with a gaseous layer portion 1A of the evaporator 1 via a U-shaped sealing portion 34A which is curved downward.

A refrigerant liquid pool 1B in which the liquefied refrigerant is accumulated is formed in a lower area of the evaporator 1, the refrigerant liquid pool 1B and a sprayer 1C, which is arranged in an upper portion of the gaseous layer portion 1A of the evaporator 1, are connected together by the refrigerant pipe 35 in which the refrigerant pump 48 is interposed.

Further, the cooling water pipe 15 is provided with a cooling water inlet temperature sensor 36 which detects a temperature of the cooling water, which flows through the cooling water pipe 15, on an inlet side and provided with a cooling water outlet temperature sensor 37 which detects a temperature of the cooling water on an outlet side.

The cold water pipe 14 is provided with a cold water inlet temperature sensor 38 which detects a temperature of the cold water, which flows through the cold water pipe 14, on an inlet side and provided with a cold water outlet temperature sensor 39 which detects a temperature of the cold water on an outlet side.

Further, the absorption-type freezer 100 of the present embodiment includes a gas extraction device 70, and the gas extraction device includes a tank 71. A gas extraction pipe 52 which communicates with the gaseous layer portion 2B of the absorber 2 is connected with an upper portion of the tank 71. A return pipe 73 which communicates with a lower area of the absorber 2 is connected with a bottom portion of the tank 71. In addition, an absorption liquid pipe 75 which is connected with the dilute absorption liquid pipe 21 via an ejector pump 74 is connected with the upper portion of the tank 71.

Furthermore, by driving the ejector pump 74, the dilute absorption liquid in the dilute absorption liquid pipe 21 is taken into the tank 71 via the absorption liquid pipe 75. An internal portion of the tank 71 is caused to have a negative pressure by the dilute absorption liquid flowing therein through the absorption liquid pipe 75, and not only non-condensable gas stored in an upper portion of the absorber 2 but also the refrigerant vapor, the vaporized absorption liquid, and so forth are thereby guided to an upper area of the tank 71 through a gas extraction pipe 72.

In the gas guided to the tank 71, the refrigerant vapor and the vaporized absorption liquid are dissolved and absorbed into the absorption liquid accumulated in a lower area of the tank 71, but the non-condensable gas cannot be dissolved into the absorption liquid and is thus accumulated in an upper area of the tank 71. Furthermore, the absorption liquid accumulated in the lower area of the tank 71 is returned to the absorber 3 through the return pipe 73.

### [1-1-2. Control Configuration]

Next, a control configuration of the present embodiment will be described.

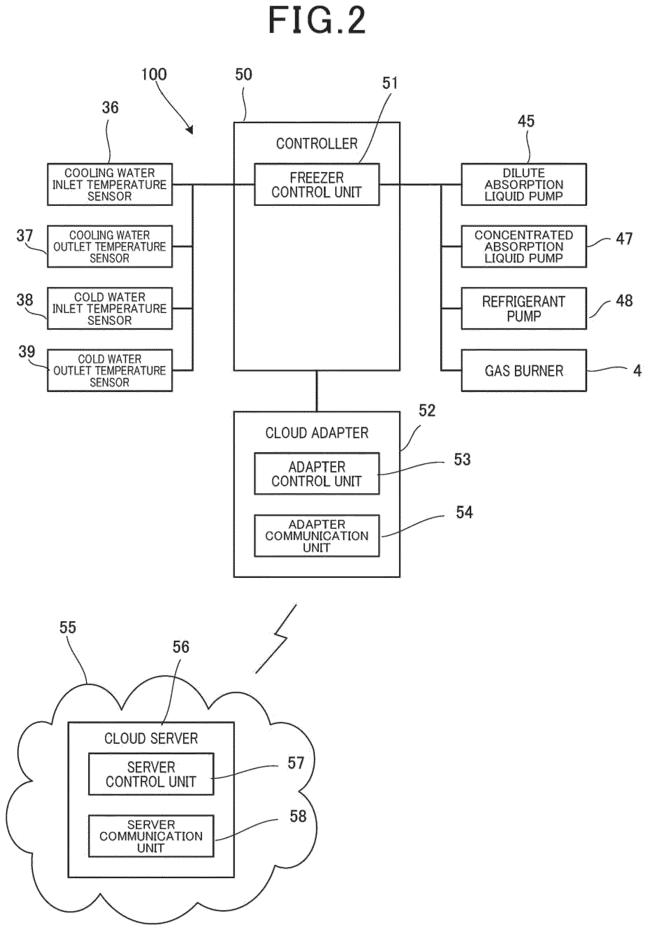

Fig. 2 is a block diagram illustrating the control configuration of the present embodiment.

As illustrated in Fig. 2, the absorption-type freezer 100 of the present embodiment includes a controller 50, and the controller 50 includes a freezer control unit 51. The freezer control unit 51 centrally controls each unit of the absorption-type freezer 100 and includes a CPU as a computation execution unit, a memory such as a ROM or a RAM which stores basic control programs executable by the CPU, predetermined data, and so forth in a non-volatile manner, other peripheral circuits, and so forth.

Further, a configuration is made such that a detection signal of each of the cooling water inlet temperature sensor 36, the cooling water outlet temperature sensor 37, the cold water inlet temperature sensor 38, and the cold water outlet temperature sensor 39 is input to the freezer control unit 51.

The freezer control unit 51 of the controller 50 is configured to control a fuel control valve 64 of the gas burner 4 of the absorption-type freezer 100, to thereby perform control of combustion by the gas burner 4, and to performs control of driving of the dilute absorption liquid pump 45, the concentrated absorption liquid pump 47, and the refrigerant pump 48. In addition, the freezer control unit 51 of the controller 50 is configured to perform inverter control for the dilute absorption liquid pump 45, the concentrated absorption liquid pump 47, and the refrigerant pump 48 and to thereby perform control of flow amounts of the dilute absorption liquid pump 45, an intermediate absorption liquid pump 46, the concentrated absorption liquid pump 47, and the refrigerant pump 48. Further, the freezer control unit 51 is configured to perform control of opening and closing of each of valves 28, V1, and V2.

Further, a cloud adapter 52 is connected with the controller 50, and a configuration is made such that various kinds of freezer data acquired by the freezer control unit 51 of the controller 50 are sent to the cloud adapter 52.

The cloud adapter 52 includes an adapter control unit 53, and the adapter control unit 53 includes a CPU as a computation execution unit, a memory such as a ROM or a RAM which stores basic control programs executable by the CPU, predetermined data, and so forth in a non-volatile manner, other peripheral circuits, and so forth.

Here, examples of the freezer data may include various kinds of data such as a cold water inlet temperature, a cold water outlet temperature, a high-temperature regenerator temperature, a condensing temperature, a cooling water inlet temperature, a cooling water outlet temperature, an absorption liquid temperature, an absorption liquid concentration, a refrigerant temperature, and a control valve opening.

The cloud adapter 52 includes an adapter communication unit 54 which performs communication with a cloud server 56 of a cloud 55.

The cloud server 56 includes a server control unit 57, and the server control unit 57 includes a CPU as a computation execution unit, a memory such as a ROM or a RAM which stores basic control programs executable by the CPU, predetermined data, and so forth in a non-volatile manner, other peripheral circuits, and so forth.

In the present embodiment, the server control unit 57 functions as a control unit of the present disclosure.

The cloud server 56 includes a server communication unit 58 which performs communication with the cloud adapter 52.

The server control unit 57 of the cloud server 56 is configured to acquire, by the server communication unit 58, the freezer data sent from the cloud adapter 52 and to perform assessment about the COP lowering, the cause analysis about the COP lowering, a measure for improving the COP, and so forth based on the freezer data.

### [1-2. Action]

Next, an action of the present embodiment will be described.

In an operation for cooling such as cooling air-conditioning, the brine (for example, cold water) is circulated and supplied to a thermal load, which is not illustrated, via the cold water pipe 14. The freezer control unit 51 controls a heat quantity to be introduced to the absorption-type freezer 100 such that a temperature of the brine on an outlet of the evaporator 1 (a temperature which is detected by the cold water outlet temperature sensor 39) becomes a predetermined set temperature, for example, 7°C.

Specifically, the freezer control unit 51 starts all of the pumps 45, 47, and 48, performs control of combustion of gas in the gas burner 4, and thereby controls thermal power of the gas burner 4 such that the temperature of the brine which is measured by the cold water outlet temperature sensor 39 becomes a predetermined temperature of 7°C.

In this case, the dilute absorption liquid from the absorber 2 is heated while being caused, by the dilute absorption liquid pump 45, to pass through the dilute absorption liquid pipe 21 and via the low-temperature heat exchanger 12 and the high-temperature heat exchanger 13 or the exhaust gas heat exchanger 41 and is sent to the high-temperature regenerator 5.

Because the absorption liquid sent to the high-temperature regenerator 5 is heated by flame by the gas burner 4 and combustion gas at a high temperature in the high-temperature regenerator 5, the refrigerant in the absorption liquid is evaporated and separated. The intermediate absorption liquid, from which refrigerant is evaporated and separated by the high-temperature regenerator 5 and whose concentration is raised, is sent to the concentrated absorption liquid pipe 25 while passing via the high-temperature heat exchanger 13 and merges with the absorption liquid which passes via the low-temperature regenerator 6.

Meanwhile, the absorption liquid sent to the low-temperature regenerator 6 is heated by the refrigerant vapor at a high temperature, which is supplied from the high-temperature regenerator 5 via the refrigerant pipe 31 and flows into the heat transfer pipe 31A, the concentration of the above absorption liquid becomes much higher because its refrigerant is further separated, and this concentrated absorption liquid merges with the above absorption liquid which passes via the high-temperature regenerator 5, is sent to the absorber 2 by the concentrated absorption liquid pump 47 while passing via the low-temperature heat exchanger 12, and is spayed from the concentrated liquid sprayer 2C.

The refrigerant which is separated and generated in the low-temperature regenerator 6 enters the condenser 7, is condensed, and is accumulated in the refrigerant liquid pool 7A. Then, when a large amount of the refrigerant liquid is accumulated in the refrigerant liquid pool 7A, the refrigerant liquid flows out from the refrigerant liquid pool 7A, enters the evaporator 1 while passing via the refrigerant pipe 34, is pumped up by an operation of the refrigerant pump 48, and is sprayed from the sprayer 1C onto the heat transfer pipe 14A of the cold water pipe 14.

Because the refrigerant liquid sprayed onto the heat transfer pipe 14A evaporates by taking heat of vaporization from the brine which passes through an internal portion of the heat transfer pipe 14A, the brine which passes through the internal portion of the heat transfer pipe 14A is cooled, the brine whose temperature is thereby lowered is supplied from the cold water pipe 14 to the thermal load, and the operation for cooling such as cooling air-conditioning is performed.

Then, the refrigerant which evaporates in the evaporator 1 enters the absorber 2 and is absorbed by the concentrated absorption liquid which is supplied from the low-temperature regenerator 6 and is sprayed from an upper area, is accumulated in the dilute absorption liquid pool 2A of the absorber 2, and is transported to the high-temperature regenerator 5 by the dilute absorption liquid pump 45, and this circulation is repeated.

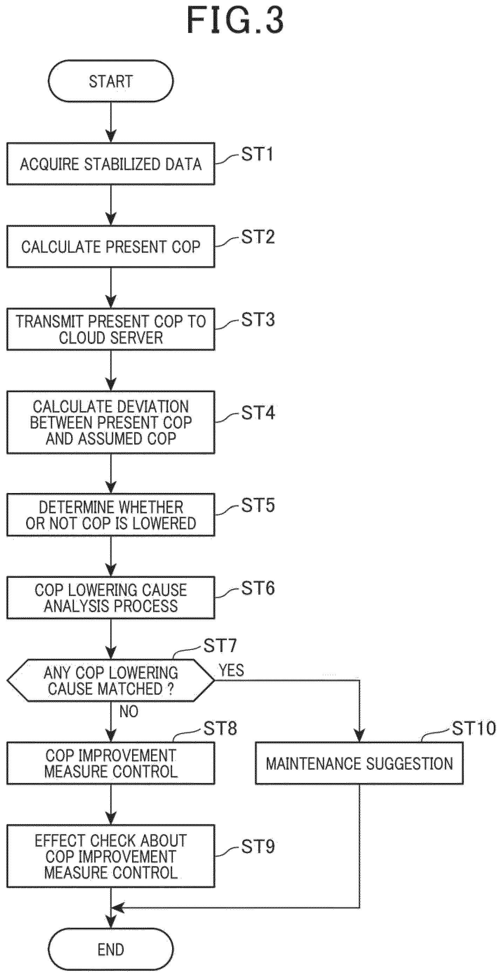

Next, control by the present embodiment will be described with reference to a flowchart illustrated in Fig. 3.

Fig. 3 is the flowchart illustrating the action of the present embodiment.

In the present embodiment, the adapter control unit 53 acquires stabilized freezer data (ST1) and calculates a present COP in a state where the absorption-type freezer 100 operates in a cooling operation or a heating operation (ST2).

The present COP can be obtained by COP = freezing capacity ÷ gas combustion heat quantity.

The freezing capacity can be obtained by (cold water inlet temperature - cold water outlet temperature) × cold water flow amount.

The cold water inlet temperature can be obtained by the cold water inlet temperature sensor 38, and the cold water outlet temperature can be obtained by the cold water outlet temperature sensor 39.

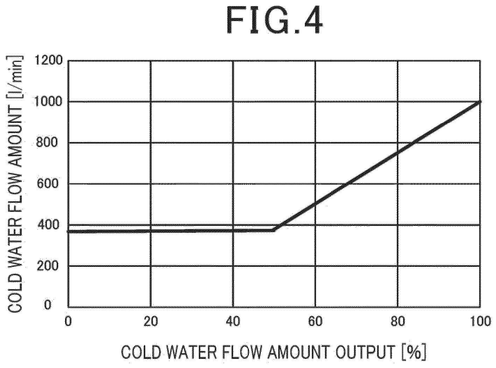

Fig. 4 is a graph representing a relationship between the cold water flow amount and a cold water flow amount output.

A worker performs measurements by using a differential pressure sensor when the absorption-type freezer 100 is installed, and the above graph is thereby generated in advance.

Although the cold water flow amount output can also be acquired by providing a cold water differential pressure sensor, in the present embodiment, an output of the cold water flow amount is measured by using the graph illustrated in Fig. 4, and the cold flow amount is thereby calculated from the cold water flow amount output.

It is possible to acquire the cold water flow amount output by monitoring a control state of the absorption-type freezer 100, for example. The cold water flow amount output may be acquired by any of the freezer control unit, the adapter control unit 53, and the server control unit 57.

In such a manner, the cold water inlet temperature and the cold water outlet temperature are acquired from the cold water inlet temperature sensor 38 and the cold water outlet temperature sensor 39, the cold water flow amount is acquired by using the graph, and the freezing capacity can thereby be calculated without providing a cold water differential pressure sensor. Note that the freezing capacity may be calculated by providing a cold water differential pressure sensor.

Next, the gas combustion heat quantity can be obtained by gas combustion heat quantity = unit gas calorific value × gas flow amount.

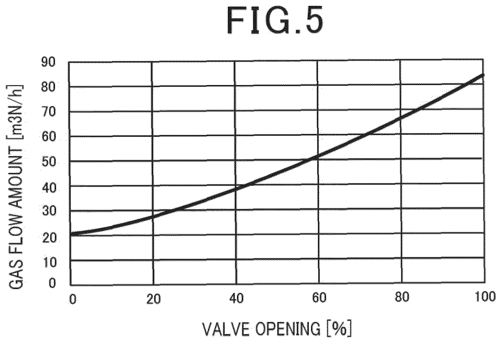

Fig. 5 is a graph representing a relationship between the gas flow amount and an opening of a gas fuel valve.

A worker performs measurements by using a gas flowmeter when the absorption-type freezer 100 is installed, and the above graph is thereby generated in advance.

It is possible to acquire the opening of the gas fuel valve by monitoring the control state of the absorption-type freezer 100, for example. The opening of the gas fuel valve may be acquired by any of the freezer control unit, the adapter control unit 53, and the server control unit 57.

The unit gas calorific value is a value which is decided in advance. Furthermore, the gas flow amount is calculated from the graph and based on the opening of the gas fuel valve, and the gas combustion heat quantity can thereby be calculated without providing a gas flowmeter. Note that the gas combustion heat quantity may be calculated by providing a gas flowmeter.

When the freezing capacity and the gas combustion heat quantity can be calculated, the present COP can be acquired.

An adapter control unit 53 transmits information about the calculated present COP to the cloud server 56 (ST3).

The server control unit 57 of the cloud server 56 compares the present COP sent from the cloud adapter 52 with an assumed COP as a reference, thereby obtains the deviation between the present COP and the assumed COP (ST4), and determines whether or not the COP is lowered (ST5).

When the deviation between the present COP and the assumed COP is within a predetermined threshold value, the server control unit 57 determines that the COP is normal. On the other hand, in a case where the deviation of the COP is higher than the predetermined threshold value, it is determined that the COP is lowered.

The server control unit 57 obtains the deviation between the present COP and the assumed COP a plurality of times (for example, 10 times) in a state where an operation state of the absorption-type freezer 100 is stable and assesses that the COP is lowered in a case where the deviation between the present COP and the assumed COP is higher than 10%, for example.

In a case where it is determined that the COP is lowered, the server control unit 57 performs a cause analysis process (ST6).

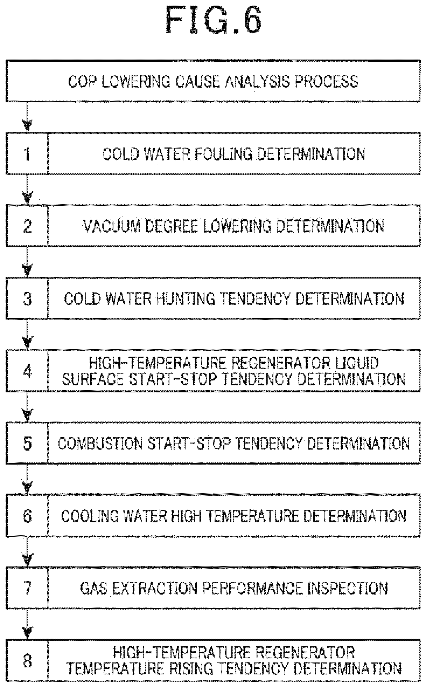

Fig. 6 is an explanatory diagram illustrating steps of the cause analysis process.

As illustrated in Fig. 6, as the cause analysis process performed by the server control unit 57, a cold water fouling determination, a vacuum degree lowering determination, a cold water hunting tendency determination, a high-temperature regenerator liquid surface start-stop tendency determination, a combustion start-stop tendency determination, a cooling water high temperature determination, a gas extraction performance inspection, and a high-temperature regenerator temperature rising tendency determination are performed.

Note that order of each process of those cause analysis processes is not limited to order illustrated in Fig. 6, and the cause analysis processes may be performed in arbitrary order or may be performed at the same time.

In the cold water fouling determination, a fouling factor is calculated from a cooling water outlet-inlet temperature of the condenser and a condensed refrigerant temperature.

The fouling factor (ACOND) can be calculated by fouling factor = (dTc - dTc0) × 100 ÷ dTc0.

Terms dTc and dTc0 can be calculated by the following expressions. dTc = condensing temperature - (cooling water outlet temperature - cooling water intermediate temperature) dTc = 1.0021 × (cooling water outlet temperature - cooling water intermediate temperature)

Then, in a case where the fouling factor is 90 or greater, it is determined that fouling of the cooling water is present.

In the vacuum degree lowering determination, determinations are made about whether or not a prediction notification about "vacuum degree lowering" for the absorption-type freezer 100 is issued, whether or not the prediction notification about "vacuum degree lowering" for the absorption-type freezer 100 is issued at a pace of 10 times/month in the most recent period, and whether or not chamber pressure (non-condensable gas storage tank pressure) change ≥ 1.5 [kPa/H]. In a case where the change in the chamber pressure is 1.5 [kPa/H] or greater, the condition is approximately three times a pressure change assumed under the normal vacuum degree.

In a case where such a situation occurs, a tendency in which an inhibitor (corrosion inhibitor) is insufficient is observed.

In the cold water hunting tendency determination, it is determined whether the COP is lowered by an influence of disturbance.

In the cold water hunting tendency determination, it is determined whether or not a cold water outlet temperature of ±0.2°C/minute or greater continues for 60 minutes.

In the high-temperature regenerator liquid surface start-stop tendency determination, it is determined whether the COP is lowered due to insufficient adjustment of a solution circulation amount.

In the high-temperature regenerator liquid surface start-stop tendency determination, it is determined whether or not liquid surface starts-stops at a pace of 5 times/hour or greater continue for 3 hours.

In the combustion start-stop tendency determination, it is determined whether the COP is lowered due to trouble with combustion by the burner or an influence of disturbance.

In the combustion start-stop tendency determination, it is determined whether or not the combustion starts-stops at a pace of 2 times/hour or greater and a freezing capacity ratio of 40% or greater continue for 3 hours.

In the cooling water high temperature determination, it is determined whether the COP is lowered due to insufficient performance of a cooling tower.

In the cooling water high temperature determination, it is determined whether or not a forecast notification about a cooling water high temperature is issued.

In the gas extraction performance inspection, it is determined whether the COP is lowered due to insufficient collection of the non-condensable gas by the gas extraction device.

In the gas extraction performance inspection, it is determined whether or not a notification about the gas extraction performance inspection is issued.

In the high-temperature regenerator temperature rising tendency determination, it is determined whether the COP is lowered due to an excessive rise of the temperature of the high-temperature regenerator.

In the high-temperature regenerator temperature rising tendency determination, it is determined whether or not the temperature of the high-temperature regenerator becomes 162°C or greater.

In a case where those COP lowering cause analyses are performed and as a result it is determined that there is any match, the server control unit 57 performs a maintenance suggestion based on the corresponding determination (ST10).

The maintenance suggestion is performed by sending, by e-mail at the beginning of the month, a report about an operating condition in the preceding month, for example, to a remote monitoring center or the like, for example. In the report, the COP lowering cause which is assessed as present is indicated. Accordingly, a maintenance worker can obtain the COP lowering cause and a guideline for maintenance.

In a case where the COP lowering cause analyses are performed, as a result it is determined that there is no match and the cause of lowering of the COP cannot be identified, the server control unit 57 carries out COP improvement measure control (ST8).

In a case where the COP improvement measure control is performed, the server control unit 57 obtains a deviation between a present concentration of the absorption liquid and an assumed concentration.

A high-temperature regenerator temperature and a low-temperature regenerator refrigerant outlet temperature are acquired by temperature sensors, the acquired temperatures are applied to a predetermined expression, and the present concentration of the absorption liquid can thereby be calculated.

Based on the deviation between the present concentration of the absorption liquid and the assumed concentration, which is calculated in such a manner, the server control unit 57 performs control so as to change a driving frequency of the dilute absorption liquid pump 45.

The control of the driving frequency is performed as follows. In a case where assumed concentration - present concentration = 0.1 to 1.0, the driving frequency is controlled to -3 Hz. In a case where assumed concentration - present concentration = 1.1 to 1.5, the driving frequency is controlled to -5 Hz. In a case where assumed concentration - present concentration = 1.6 to 2.0, the driving frequency is controlled to -8 Hz. In a case where assumed concentration - present concentration = 2.1 or greater, an instruction for an inspection is given without changing the driving frequency.

The server control unit 57 performs the COP improvement measure control and thereafter performs an effect check about the COP improvement measure control (ST9).

The server control unit 57 performs the COP improvement measure control, thereafter obtains a COP deviation at a time after the COP improvement measure control, compares that with the COP deviation at a time before the COP improvement measure control, and thereby performs the effect check.

In a case where the COP deviation at the time after the COP improvement measure control is larger than the COP deviation at the time before the COP improvement measure control + 2%, that is, it is assessed that the COP is further degraded although the COP improvement measure control has been performed, the server control unit 57 suspends the COP improvement measure control and returns the driving frequency of the dilute absorption liquid pump 45 to the original frequency.

Subsequently, the server control unit 57 does not carry out the COP improvement measure control until the absorption-type freezer 100 is stopped.

Together with the effect check, the server control unit 57 performs a safety measure in excessive control.

In the safety measure in excessive control, in a case where either one of a condition that a concentrated liquid concentration computation value of the absorption liquid be a first threshold value (for example, 64 wt%) or greater and a condition that the temperature of the high-temperature regenerator be a second threshold value (for example, 158°C) or greater is satisfied, the COP improvement measure control is suspended until the operation is stopped, and the driving frequency of the dilute absorption liquid pump 45 is returned to the original frequency.

Subsequently, the server control unit 57 does not carry out the COP improvement measure control until the absorption-type freezer 100 is stopped.

Note that the above-described first threshold value and second threshold value are set to smaller values than those of a condition for stopping the absorption-type freezer 100. For example, when the condition for stopping the absorption-type freezer 100 is that the concentrated liquid concentration computation value of the absorption liquid be 65.5 wt% or greater or that the temperature of the high-temperature regenerator be 165°C or greater, the first threshold value is set to 64 wt%, and the second threshold value is set to 158°C. Threshold values prepared for an occurrence of abnormality are stepwise set in such a manner, the absorption-type freezer 100 can perform stepwise measures such as first suspending the COP improvement measure control in an occurrence of abnormality and stopping the absorption-type freezer 100 in a case where the abnormality is not eliminated in spite of the suspension.

### [1-3. Effects and So Forth]

As described above, in the present embodiment, the absorption-type freezer 100 is provided which includes the high-temperature regenerator 5, the low-temperature regenerator 6, the evaporator 1, the condenser 7, and the absorber 3 with circulation paths for the absorption liquid and the refrigerant being respectively formed by connecting those together by piping. The server control unit 57 (control unit) is provided, and the server control unit 57 determines whether or not the COP is lowered, performs an analysis process about a cause of lowering of the COP in a case where it is determined that the COP is lowered, and performs improvement measure control for the COP in a case where the cause of lowering of the COP cannot be identified as a result of the analysis process about the cause of lowering of the COP.

Accordingly, the server control unit 57 can constantly monitor lowering of the COP and thereby perform the cause analysis about the COP lowering, the improvement measure control for the COP is performed in a case where the cause of lowering of the COP cannot be identified, and the COP can thereby be improved in a case where the COP is lowered.

Further, in the present embodiment, the server control unit 57 (control unit) obtains the deviation between the present COP and the assumed COP and determines that the COP is lowered in a case where the deviation between the present COP and the assumed COP is the predetermined threshold value or greater.

Accordingly, based on the present COP and the assumed COP, it can be determined whether or not the COP is lowered.

Further, in the present embodiment, in a case where the cause of lowering of the COP is present as a result of the analysis process about the cause of lowering of the COP, the server control unit 57 (control unit) creates the maintenance suggestion about the COP lowering cause.

Accordingly, in a case where the COP lowering cause is present, the maintenance suggestion about the lowering cause is created, and the maintenance worker can thereby obtain the COP lowering cause and the guideline for maintenance.

Further, in the present embodiment, the cloud adapter 52 which is capable of communicating with the cloud server 56 is connected with the absorption-type freezer 100, and the control unit is the server control unit 57 of the cloud server 56 or the adapter control unit 53 of the cloud adapter 52.

Accordingly, the server control unit 57 of the cloud server 56 or the adapter control unit 53 of the cloud adapter 52 can perform analysis processes and so forth about presence or absence of lowering of the COP and about the COP lowering cause.

### (Other Embodiments)

As described above, as an example of a technique disclosed in the present application, the first embodiment is described. However, the technique in the present disclosure is not limited to this and can be applied to embodiments in which changes, substitutions, addition, omission, and so forth are performed. Further, it is possible to make a new embodiment by combining configuration elements described in the above first embodiment.

Each unit illustrated in Fig. 2 is one example, and a specific mounting form is not particularly limited. In other words, hardware which individually corresponds to each unit does not necessarily have to be mounted, and it goes without saying that a configuration is possible in which one processor executes a program and thereby realizes a function of each unit. Further, a part of a function which is realized with software in the above-described embodiment may be provided as hardware, or a part of a function which is realized with hardware may be realized with software.

Further, in the first embodiment, a description is made about an example where as the control unit, the server control unit 57 of the cloud server 56 is used, but the present disclosure is not limited to this. For example, the adapter control unit 53 of the cloud adapter 52 may be used.

In addition, the freezer control unit is caused to have a similar function to that of the adapter control unit 53, and the freezer control unit may thereby be used as the control unit.

Further, in the first embodiment, the server control unit 57 compares the present COP with the assumed COP as the reference and determines whether or not the COP is lowered based on the deviation between the present COP and the assumed COP, but the present disclosure is not limited to this.

For example, even in a case where the deviation between the present COP and the assumed COP is within the predetermined threshold value, when the present COP is slightly lower than the assumed COP (for example, 2%), maintenance of the absorption-type freezer 100 may be suggested by the maintenance suggestion. In this case, a COP lowering cause analysis process and the COP improvement measure control are not performed.

Further, in the first embodiment, in a case where the COP lowering cause cannot be identified, the server control unit 57 necessarily performs the COP improvement measure control; however, in a case where the COP lowering cause cannot be identified, whether or not the COP improvement measure control is carried out may be switched in accordance with a user, a property in which the absorption-type freezer 100 is installed, or settings of the absorption-type freezer 100.

### [Industrial Applicability]

The present disclosure is applicable to an absorption-type freezer that can monitor lowering of a COP and perform a cause analysis about COP lowering in a case where the COP is lowered.

### [Reference Signs List]

- 1: evaporator
- 2: absorber
- 3: absorber
- 4: gas burner
- 5: high-temperature regenerator
- 6: low-temperature regenerator
- 7: condenser
- 12: low-temperature heat exchanger
- 13: high-temperature heat exchanger
- 14: cold water pipe
- 15: cooling water pipe
- 17: refrigerant drain heat collector
- 21: dilute absorption liquid pipe
- 36: cooling water inlet temperature sensor
- 37: cooling water outlet temperature sensor
- 38: cold water inlet temperature sensor
- 39: cold water outlet temperature sensor
- 41: exhaust gas heat exchanger
- 45: dilute absorption liquid pump
- 46: intermediate absorption liquid pump
- 47: concentrated absorption liquid pump
- 48: refrigerant pump
- 50: controller
- 51: freezer control unit
- 52: cloud adapter
- 53: adapter control unit
- 54: adapter communication unit
- 55: cloud
- 56: cloud server
- 57: server control unit
- 58: server communication unit
- 64: fuel control valve
- 70: gas extraction device
- 100: absorption-type freezer
- V1: open-close valve
- V2: open-close valve

## Claims

1. A remote monitoring system of an absorption-type freezer, the remote monitoring system comprising:
an absorption-type freezer which includes a high-temperature regenerator, a low-temperature regenerator, an evaporator, a condenser, and an absorber with circulation paths for an absorption liquid and a refrigerant being respectively formed by connecting together, by piping, the high-temperature regenerator, the low-temperature regenerator, the evaporator, the condenser, and the absorber; and
a control unit, **characterized in that**
the control unit determines whether or not a COP is lowered, performs an analysis process about a cause of lowering of the COP in a case where the COP is determined to be lowered, and
performs improvement measure control for the COP in a case where the cause of lowering of the COP is not present as a result of the analysis process about the cause of lowering of the COP.

2. The remote monitoring system of an absorption-type freezer according to claim 1, wherein
the control unit obtains a deviation between a present COP and an assumed COP and determines that the COP is lowered in a case where the deviation between the present COP and the assumed COP is a predetermined threshold value or greater.

3. The remote monitoring system of an absorption-type freezer according to claim 1, wherein
in a case where the cause of lowering of the COP is present as a result of the analysis process about the cause of lowering of the COP, the control unit creates a maintenance suggestion about a COP lowering cause.

4. The remote monitoring system of an absorption-type freezer according to any one of claims 1 to 3, wherein
a cloud adapter which is capable of communicating with a cloud server is connected with the absorption-type freezer, and
the control unit is a server control unit of the cloud server or an adapter control unit of the cloud adapter.
